# EUROPEAN PATENT APPLICATION

(11) **EP 1 666 878 A1**
(43) Date of publication of application: **07.06.2006**
(21) Application number: 04772604.7
(22) Date of filing: 01.09.2004
(51) Int. Cl.: G01N 30/46, G01N 30/26, G01N 30/84

(54) **LIQUID CHROMATOGRAPHIC APPARATUS**

(30) Priority: 05.09.2003 JP 2003313660
(71) Applicant: Sumitomo Chemical Company, Limited, Tokyo 104-8260 (JP)
(72) Inventor: YAMASHITA, Kazuko, 5360025 (JP); NAKAI, Kiyoshi, 6550882 (JP)
(74) Representative: Vossius & Partner
(86) International application number: PCT/JP2004/012648
(87) International publication number: WO 2005/024412

(57) **Abstract**

An apparatus has a one-dimensional analysis column for separating a sample into a plurality of components, a preparative portion for fractionating the separated components, component by component and for keeping a fractionated component, a plurality of trap columns for trapping a component supplied from the preparative portion, a two-dimensional analysis column for further separating a component trapped in the trap columns, into a plurality of components, and a path switching mechanism for effecting switching between a state in which the preparative portion is connected to a first trap column out of the plurality of trap columns and in which the two-dimensional analysis column is connected to a second trap column out of the plurality of trap columns, and a state in which the preparative portion is connected to the second trap column out of the plurality of trap columns and in which the two-dimensional analysis column is connected to the first trap column out of the plurality of trap columns.

## Description

### Technical Field

The present invention relates to liquid chromatography apparatus such as high-performance liquid chromatography apparatus and, more particularly, to a liquid chromatography apparatus with a function of trapping and concentrating a separated component in a trap column.

### Background Art

The conventional two-dimensional high-performance liquid chromatography apparatus was arranged to fractionate an eluent containing at least one target component to be analyzed, in a downstream of a column in one-dimensional analysis, to make the target component adsorbed in a trap column or the like, to elute the target component adsorbed in the trap column, and to reanalyze it in two-dimensional analysis.

There is only one trap column provided, and, after completion of the trapping and concentration operation in the trap column, the component trapped in the trap column is eluted and introduced into the two-dimensional analysis column, thus performing the trapping and concentration operation and the two-dimensional analysis in time series (e.g., reference is made to Non-patent Document 1 and Non-patent Document 2).
Non-patent Document 1: High Performance Liquid Chromatography: Biochemical and Biomedical Applications, authored by P. R. BROWN, translated jointly by Susumu Nishimura, Takao Sekiya, and Hiroshi Kasai, and published by TOKYO KAGAKU DOZIN Co., Ltd. (1979), line 8 on page 21 to line 6 on page 25.
Non-patent Document 2: Liquid Chromatography in Biotechnology Field, Aggregate of General Resources of Industrialization Technology, edited by Kenji Soda and published by NIS Inc. (January 20, 1987), p169-p171.

### Disclosure of the Invention

### Problem to be Solved by the Invention

The conventional two-dimensional high-performance liquid chromatography apparatus performing the trapping-concentration operation and the two-dimensional analysis in time series has a limit to increase in processing efficiency.

An object of the present invention is therefore to increase the processing efficiency of the liquid chromatography apparatus such as the two-dimensional high-performance liquid chromatography apparatus.

### Means for Solving the Problem

The Inventors conducted elaborate research to increase the processing efficiency of the liquid chromatography apparatus and accomplished the invention described below.

Specifically, a liquid chromatography apparatus of the present invention comprises:
a fractionation flow path for guiding a sample injected through a sample injection part, to a one-dimensional analysis column by a mobile phase for one-dimensional analysis to effect separation thereof, and for fractionating a separated component with an eluent and keeping the separated component and eluent in a preparative portion;
a trap flow path for feeding the component and eluent kept in the preparative portion, to a trap column by a diluent, and for making the component trapped and concentrated in the trap column, wherein the trap column comprises a plurality of trap columns:
   an analysis flow path for guiding the component trapped in the trap column, to a two-dimensional analysis column by a mobile phase for two-dimensional analysis, and for analyzing the component; and
   a path switching mechanism for simultaneously carrying out a trapping-concentration operation in one trap column of the trap flow path, and a two-dimensional analysis of a component from another trap column.

Another liquid chromatography apparatus according to another aspect of the invention comprises:
a one-dimensional analysis column for separating a sample into a plurality of components;
a preparative portion for fractionating the components separated by the one-dimensional analysis column, component by component, and for keeping the fractionated component;
a plurality of trap columns for trapping a component supplied from the preparative portion;
a two-dimensional analysis column for further separating a component trapped in the trap column, into a plurality of components; and
a path switching mechanism for implementing switching between:
   a state in which the preparative portion is connected to a first trap column out of the plurality of trap columns and in which the two-dimensional analysis column is connected to a second trap column out of the plurality of trap columns, and
   a state in which the preparative portion is connected to the second trap column out of the plurality of trap columns and in which the two-dimensional analysis column is connected to the first trap column out of the plurality of trap columns.

The apparatus of the present invention is arranged to simultaneously perform the different kinds of operations as described above, whereby the processing efficiency is increased, as compared with the conventional apparatus having one trap column and performing the trapping-concentration operation and the two-dimensional analysis in time series.

In other words, the liquid chromatography apparatus of the present invention has the path switching mechanism and the plurality of trap columns, whereby it is able to perform the trapping-concentration operation and the two-dimensional analysis operation in parallel as described below.

First, in the state in which the preparative portion is connected to the first trap column and in which the two-dimensional analysis column is connected to the second trap column, a component fractionated in the preparative portion is supplied to the first trap column and this component is trapped and concentrated in the first trap column; a component previously trapped in the second trap column is supplied to the two-dimensional analysis column to be subjected to a two-dimensional analysis.

In the state in which the preparative portion is connected to the second trap column and in which the two-dimensional analysis column is connected to the first trap column, a component fractionated in the preparative portion is supplied to the second trap column and this component is trapped and concentrated in the second trap column; a component previously trapped in the first trap column is supplied to the two-dimensional analysis column to be subjected to a two-dimensional analysis.

By repeating such switching between the first state and the second state of the path switching mechanism, it becomes feasible to perform the trapping-concentration operation of trapping and concentrating the component fractionated in the preparative portion, in the trap column and the two-dimensional analysis operation of analyzing the component trapped in the trap column, in the two-dimensional analysis column in parallel. Therefore, the present invention achieves an increase in the processing efficiency, e.g., a reduction of analysis time, as compared with the conventional apparatus having one trap column and performing the trapping-concentration operation and the two-dimensional analysis operation in time series, i.e., performing the operations in series.

In the aforementioned two liquid chromatography apparatus, an inside diameter of the two-dimensional analysis column is preferably 0.03-0.3 mm. The use of such a column achieves an improvement in analysis sensitivity.

### Effect of the Invention

Since the apparatus of the present invention is provided with a plurality of trap columns and arranged so as to simultaneously perform the trapping-concentration operation in one trap column and the two-dimensional analysis from another trap column, the processing efficiency is improved, as compared with the conventional apparatus having one trap column and performing the trapping-concentration operation and the two-dimensional analysis in time series.

### Brief Description of the Drawings

Fig. 1 is a flow path chart showing a first embodiment in a state of a one-dimensional analysis step.
Fig. 2 is a flow path diagram showing the first embodiment in a state of a concentration step and a two-dimensional analysis step.
Fig. 3 is a flow path diagram showing the first embodiment in another state of the concentration step and the two-dimensional analysis step.
Fig. 4 is a flow path diagram showing a second embodiment in a state of a one-dimensional analysis step and a two-dimensional analysis step.
Fig. 5 is a flow path diagram of the second embodiment in a state of a concentration step and a two-dimensional analysis step.

### Description of Reference Symbols

- 2a, 2b, 36a, 36b: liquid feed pumps
- 4a, 4b: mobile phases for one-dimensional analysis
- 6a, 6b: diluents
- 8, 39: online degassers
- 10, 12, 22, 28a, 28b, 50: switching valves
- 14,40: mixers
- 16: auto sampler
- 18, 32: analysis columns
- 20: UV detector
- 24: fraction loop
- 26a, 26b, 42a, 42b: distribution valves
- 30a,30b: trap columns
- 42: column oven

### Best Mode for Carrying out the Invention

In the present invention the term "sample" means a sample of any form and encompasses a sample component itself, a solution of a sample component-containing preparation or the like, and, for example, a sample component containing blood, plasma, or urine as a medium.

In a preferred mode of the present invention, a microcolumn (e.g., reference is made to New High-performance Liquid Chromatography (editor: Hiroyuki Hatano, Nankodo Co., Ltd. (November 30, 1978)), p49-p50) is used for two-dimensional analysis. This permits the sample trapped in the trap column to be efficiently concentrated to a high concentration in the two-dimensional analysis column, thereby achieving high-sensitivity analysis.

Embodiments of the present invention will be described below in detail with reference to the drawings.

### (Embodiment 1)

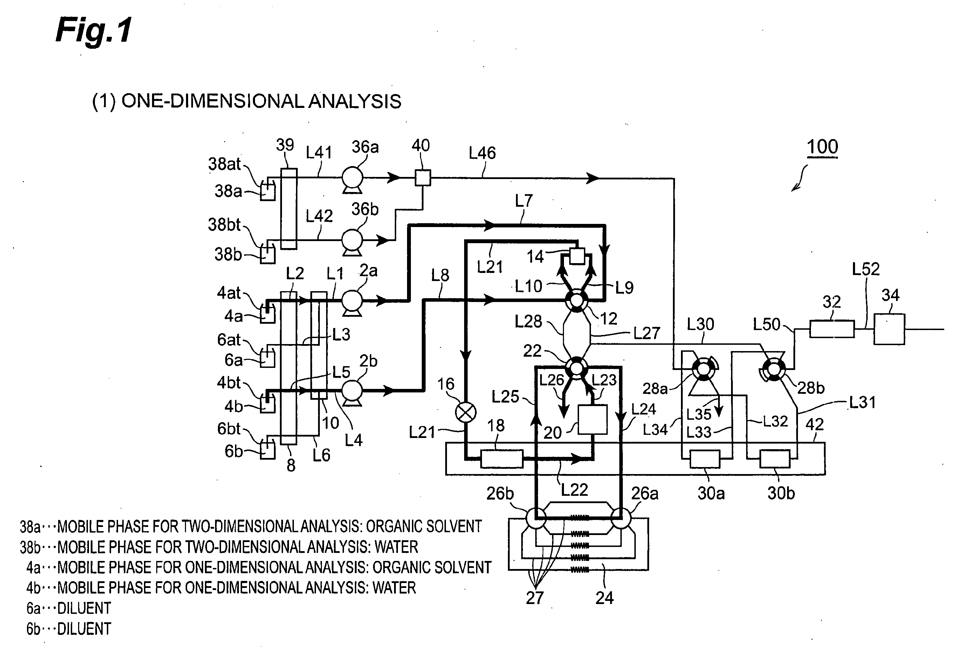

Fig. 1 shows a liquid chromatography apparatus 100 according to the first embodiment.

This liquid chromatography apparatus 100 is provided with two liquid feed pumps 2a and 2b each of which permits individual setting of flow rates for supplying a mobile phase for one-dimensional analysis and a diluent. A flow path for organic solvent 4a being a mobile phase for one-dimensional analysis and a flow path for diluent 6a are connected to the liquid feed pump 2a. The organic solvent 4a and diluent 6a are connected via online degasser 8 for preventing mixing of gas and via switching valve 10 to the liquid feed pump 2a, and the switching valve 10 is arranged to switch the flow paths to connect either of the organic solvent 4a and diluent 6a.

In other words, the liquid feed pump 2a and the switching valve 10 are connected by flow path L1, the switching valve 10 is connected through flow path L2 to organic solvent tank 4at retaining the organic solvent 4a, and the switching valve 10 is connected through flow path L3 to diluent tank 6at retaining the diluent 6a. The online degasser 8 is connected to each of the flow paths L2 and L3. The switching valve 10 can implement switching between a first state in which the flow path L 1 is connected to the flow path L2 and a second state in which the flow ' path L 1 is connected to the flow path L3.

Similarly, flow paths for water 4b as a mobile phase for one-dimensional analysis, and for diluent 6b are connected to the other liquid feed pump 2b. The water 4b and diluent 6b both are connected via online degasser 8 and via switching valve 10 to the liquid feed pump 2b and the switching valve 10 is arranged to switch the flow paths so as to connect either of water 4b and diluent 6b to the pump.

In other words, the liquid feed pump 2b and the switching valve 10 are connected through flow path L4, the switching valve 10 is connected through flow path L5 to water tank 4bt retaining the water 4b, and the switching valve 10 is connected through flow path L6 to diluent tank 6bt retaining the diluent 6b. The online degasser 8 is connected to each of the flow path L5 and flow path L6. The switching valve 10 further connects the flow path L4 to the flow path L5 in a first state and connects the flow path L4 to the flow path L6 in a second state.

The diluents 6a and 6b may be the same, and for each of them, a solvent is selected so as to increase adsorption efficiency to the trap column according to the organic solvent 4a or water 4b being the mobile phase. Specifically, the diluents 6a, 6b can be water or an aqueous solution not containing any buffer such as a nonvolatile salt. In cases where a mobile phase containing a buffer is used for the one-dimensional analysis, use of the diluent containing no buffer permits a desalting process to be performed in the operation of trapping and concentrating a component in the trap column. By using such a diluent containing no buffer, it is also possible to prepare .an analysis sample substantially containing no buffer, suitable for mass spectroscopy or the like susceptible to the buffers such as nonvolatile salts. For this reason, it is also feasible to perform an online analysis while connecting a mass spectrometer or a nuclear magnetic resonance apparatus to outlet flow path L52.

Flow paths downstream the liquid feed pumps 2a and 2b are connected through switching valve 12 to mixer 14 for mixing the liquids from the two flow paths, and a flow path L21 of a solution resulting from the mixing in the mixer 14 is connected through auto sampler (sample injection part) 16 being a sample introducing portion, to one-dimensional analysis column 18.

In other words, the liquid feed pumps 2a and 2b are connected through respective flow paths L7, L8 to the switching valve 12, and two inlets of the mixer 14 are also connected through respective flow paths L9, L 10 to the switching valve 12. This switching valve 12 is further connected through two flow paths L27, L28 to switching valve 22 described later. The switching valve 12 is arranged to implement switching between a first state in which the flow path L7 is connected to the flow path L9, the flow path L8 to the flow path L10, and the flow path L28 to the flow path L27, and a second state in which the flow path L9 is connected to the flow path L10, the flow path L8 to the flow path L28, and the flow path L7 to the flow path L27.

A flow path L22 downstream the analysis column 18 is connected to UV (ultraviolet) detector 20, so that the detector 20 can detect a component separated by the analysis column 18. A flow path L23 downstream the detector 20 is connected through switching valve 22 to fraction loop (preparative portion) 24. The fraction loop 24 is provided with a plurality of parallel flow paths 27 between two distribution valves 26a and 26b, so as to be able to keep a fractionated component and a mobile phase in each flow path 27.

In other words, an outlet of the detector 20 and the switching valve 22 are connected through flow path L23, the switching valve 22 and the distribution valve 26a are connected through flow path L24, and the switching valve 22 and distribution valve 26b are connected through flow path L25.

A flow path L26 connected to a drain is also connected to the switching valve 22.

This switching valve 22 is arranged to implement switching between a first state in which the flow path L25 is connected to the flow path L26, the flow path L23 to the flow path L24, and the flow path L28 to the flow path L27, and a second state in which the flow path L25 is connected to the flow path L28, the flow path L27 to the flow path L24, and the flow path L26 to the flow path L23.

As described above, the two flow paths L28, L27 are connected between the valves 12 and 22 and one flow path L27 is branched to be connected to a trap flow path.

In the trap flow path two trap columns are provided as indicated as trap columns 30a and 30b, two switching valves are also provided as indicated as switching valves 28a and 28b, and the trap columns 30a and 30b both are connected to the switching valves 28a and 28b so as to be simultaneously used. A flow path L30 branched from one flow path L27 between the valves 12 and 22 is connected to switching valve 28b, and a two-dimensional analysis column 32 is also connected through flow path L50 to the switching valve 28b.

In other words, the switching valve 28b is connected to an end of the flow path L30, one end of the trap column 30b is connected through flow path L31 to the switching valve 28b, and one end of the trap column 30a is connected through flow path L33 to the switching valve 28b. The other end of the trap column 30b is connected through flow path L32 to the switching valve 28a, and the other end of the trap column 30a is connected through flow path L34 to the switching valve 28a. Furthermore, a flow path L35 connected to a drain is also connected to the switching valve 28a.

A UV detector 34 is connected to flow path L52 downstream the analysis column 32.

This liquid chromatography apparatus 100 is provided with two liquid feed pumps 36a and 36b for supplying mobile phases for two-dimensional analysis. Flow paths for organic solvent 38a and for water 38b being mobile phases for two-dimensional analysis are connected each through online degasser 39 to the liquid feed pumps 36a, 36b, respectively. Flow paths downstream the liquid feed pumps 36a and 36b are connected through mixer 40 for mixing the liquids from the two flow paths, to the switching valve 28a.

In other words, one inlet of the mixer 40 is connected to organic solvent tank 38at retaining the organic solvent 38a, through flow path L41 to which the liquid feed pump 36a and online degasser 39 are connected. In addition, another inlet of the mixer 40 is connected to water tank 38bt retaining the water 38b, through flow path L42 to which the liquid feed pump 36b and online degasser 39 are connected. An outlet of the mixer 40 is connected through flow path L46 to the switching valve 28a.

The switching valve 28a is arranged to implement switching between a first state in which the flow path L46 is connected to the flow path L34 and in which the flow path L32 is connected to the flow path L35, and a second state in which the flow path L46 is connected to the flow path L32 and in which the flow path L34 is connected to the flow path L35.

The switching valve 28b is arranged to implement switching between a first state in which the flow path L33 is connected to the flow path L50 and in which the flow path L30 is connected to the flow path L31, and a second state in which the flow path L30 is connected to the flow path L33 and in which the flow path L31 is connected to the flow path L50.

Reference symbol 42 denotes a column oven, which keeps the analysis column 18 and trap columns 30a, 30b at a fixed temperature.

The analysis columns 18, 32 may be identical to or different from each other, and may be selected according to a component to be separated and analyzed, from a variety of columns such as normal phase columns, reversed phase columns, ion-exchange columns, affinity chromatography columns, and GPC (gel permeation chromatography) columns.

Particularly, the two-dimensional analysis column 32 is preferably a column called a microcolumn or a nanocolumn, i.e., a column having the inside diameter of 0.03-0.3 mm, in order to enhance the analysis sensitivity. The length of the two-dimensional analysis column 32 is normally about 10-30 cm.

The trap columns 30a, 30b may be those of a type suitable for a compound as a target for analysis, e.g., short columns of the same kind as the analysis columns 18, 32. Specifically, the trap columns 30a, 30b to be used are normally columns having the inside diameter smaller than that of the one-dimensional analysis column, and thus the trap columns are normally columns with the inside diameter of 0.03-1.2 mm and preferably columns with the inside diameter of 0.03-0.3 mm, which can differ depending upon the inside diameter of the one-dimensional analysis column. The trap columns 30a, 30b can be, for example, packed columns made by packing a packing agent in a tubular member, monolith columns, or the like. Where the packed columns are used as the trap columns, it is preferable to use the packed columns in which a bulking agent having particle sizes of 10-60 µm is packed. There are no particular restrictions on the length of the trap columns, and the length of the trap columns is normally about 10-100 mm.

Here the switching valve 28a and the switching valve 28b form a path switching mechanism.

The one-dimensional analysis column 18, fraction loop 24, flow path L22, flow path L23, flow path L25, flow path L24, flow path L21, etc. form a fraction flow path.

The trap columns 30a, 30b, flow path L34, flow path L33, flow path L32, flow path L31, flow path L30, flow path L35, etc. form a trap flow path.

The two-dimensional analysis column 32, flow path L50, etc. form an analysis flow path.

Next, the operation of this embodiment will be described.

### (One-dimensional Analysis).

Fig. 1 shows the step of the one-dimensional analysis and fractionation. Portions indicated by thick lines among the flow paths represent flow paths indicating the principal operation of the step. The same also applies to the description of the drawings hereinafter.

First, the switching valves 10, 12, 22 are preliminarily set each in the first state.

The liquid feed pumps 2a and 2b feed the liquids in a state in which the organic solvent 4a and water 4b being the mobile phases are selected by the switching valve 10. The organic solvent 4a and water 4h being the mobile phases are fed through the switching valve 12 to be mixed by the mixer 14, and the mixture flows through the auto sampler 16 to the analysis column 18. A sample injected from the auto sampler 16 is separated in the analysis column 18 to be eluted and detected by the detector 20. When the detector 20 detects a peak, the distribution valves 26a and 26b act according to a signal of the peak, so that a fractionated sample component is held together with the mobile phase in one of the flow paths 27 of the fraction loop 24.

The distribution valves 26a and 26b are switched at every detection of a peak by the detector 20 so as to keep a fractionated sample component and the mobile phase in each flow path 27 in the fraction loop 24. The rest of the mobile phase flowing out of the analysis column 18 without being kept in the fraction loop 24 is discharged through the flow path L26 and the drain.

During this step, the organic solvent 38a and water 38b being the mobile phases for two-dimensional analysis are also supplied in a degassed state through the online degasser 39 by the respective liquid feed pumps 36a and 36b, and fed as mixed by the mixer 40, and the mobile phase flows through either trap column 30a or 30b from the switching valve 28a to the two-dimensional analysis column 32, thereby effecting conditioning of the trap columns, the two-dimensional analysis column 32, and so on.

### (Concentration and Two-dimensional Analysis)

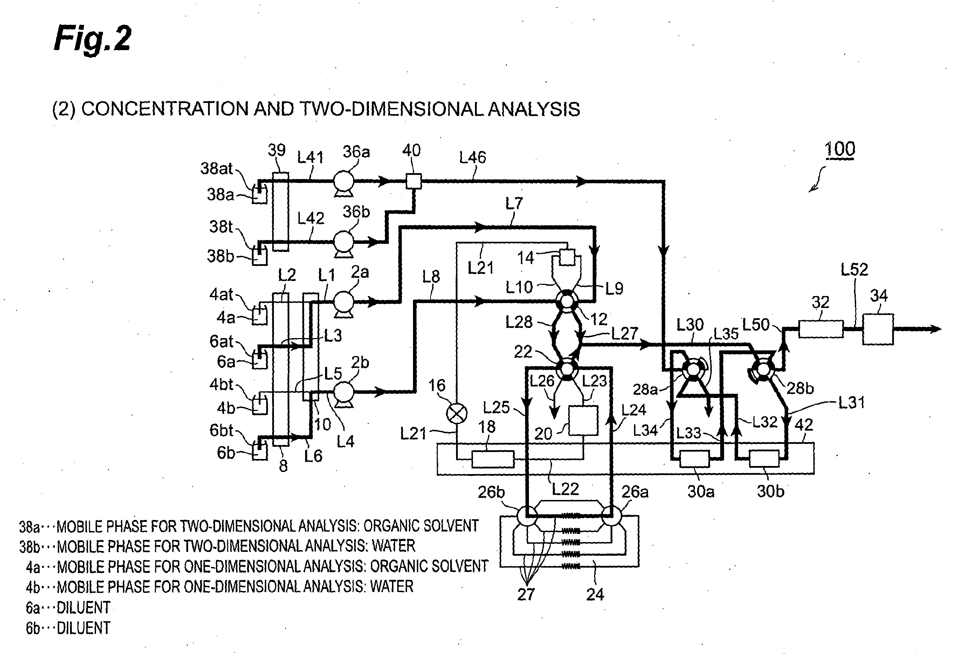

Fig. 2 will be used to explain an operation of concentration in the trap column 30b and an operation of eluting a sample component trapped in the trap column 30a and performing the two-dimensional analysis in the analysis column 32.

The switching valve 10 is switched so as to supply the diluents 6a and 6b by the liquid feed pumps 2a and 2b. Namely, the switching valve 10 is switched into the second state. Furthermore, the switching valves 12, 22 are switched each into the second state. The switching valves 28a, 28b are assumed to be in the first state.

The diluent 6b supplied by the liquid feed pump 2b is guided through the switching valves 12, 22, and then through the distribution valve 26b and the predetermined fraction loop 24, and a fractionated component and the mobile phase having been kept in the fraction loop 24, specifically, in one of the flow paths 27 in the fraction loop 24 are guided from the distribution valve 26a through the switching valves 22, 28b to the trap column 30b. Namely, the diluent 6b flows through the flow path L8, flow path L28, flow path L25, fraction loop 24, flow path L24, flow path L27, flow path L30, and flow path L31 to push out the component fractionated in the fraction loop 24, and then arrives at the trap column 30b.

At this time, the diluent 6a is supplied from the pump 2a through the switching valve 12 to merge with the flow path having passed the fraction loop 24 and is guided to the trap column 30b while diluting the mobile phase from the flow path. Namely, the diluent 6a flows through the flow path L7, flow path L27, flow path L30, and flow path L31 and arrives at the trap column 30b while diluting the component flowing out of the fraction loop 24.

The sample component is trapped in the trap column 30b to be concentrated. Namely, the component fractionated in the fraction loop 24 is trapped in the trap column 30b, so that this component is concentrated in the trap column 30b. The mobile phase and the diluent having passed the trap column 30b are discharged through the switching valve 28a to the drain.

On the other hand, the organic solvent 38a and water 38b being the mobile phases for two-dimensional analysis are supplied in a degassed state through the online degasser 39 by the respective liquid feed pumps 36a and 36b, and fed as mixed by the mixer 40. The mixture of the mobile phases flows through the switching valve 28a to the trap column 30a and elutes a sample component having been trapped in the trap column 30a, to guide it through the switching valve 28b to the two-dimensional analysis column 32. Namely, the organic solvent 38a and water 38b flow in the order of the flow path L46, flow path L34, trap column 30a, flow path L33, flow path L50, and two-dimensional analysis column 32 to elute the component concentrated in the trap column and supply it to the two-dimensional analysis column 32.

The sample component guided to the analysis column 32 is further separated in the analysis column 32 to be eluted and detected by the detector 34.

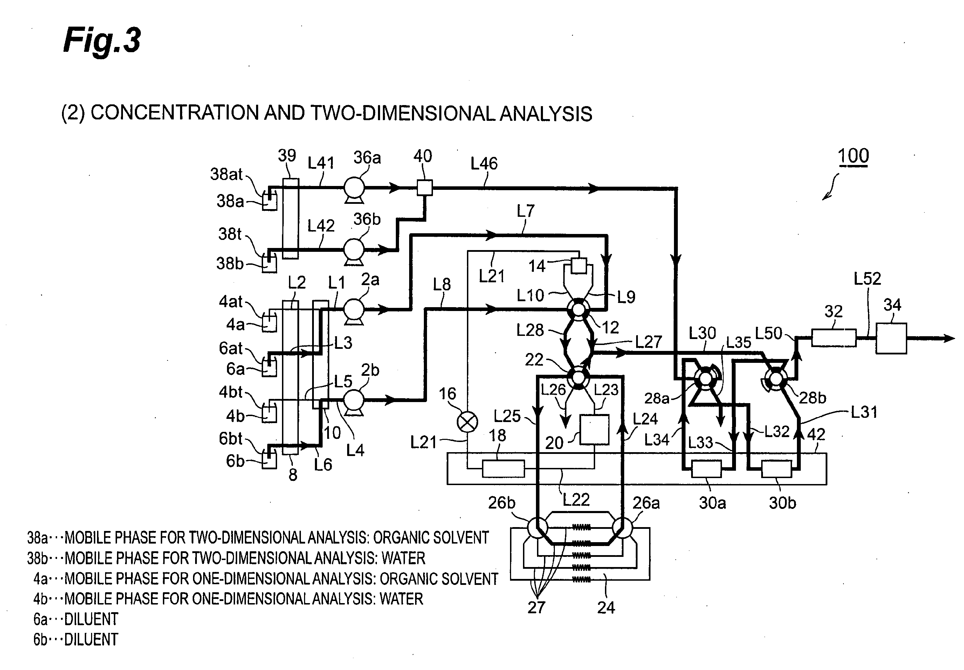

Next, the switching valves 28a and 28b are switched, so as to carry out the concentration in the trap column 30a and the operation of eluting the sample component having been trapped in the trap column 30b and performing the two-dimensional analysis in the analysis column 32 (cf. Fig. 3).

Namely, when the switching valves 28a, 28b are switched each into the second state, the component having been fractionated in the fraction loop 24 is pushed out by the diluent 6b in the same manner as above, is diluted with the diluent 6a, and is then guided through the flow path L30, switching valve 28b, and flow path L33 to the trap column 30a. The component fractionated in the fraction loop 24 is trapped and concentrated in the trap column 30a, while the unnecessary mobile phase and diluent pass through the trap column 30a to be discharged through the flow path L34, switching valve 28a, and flow path L35 to the drain. On the occasion of switching the switching valves 28a, 28b into a different state, the distribution valves 26a, 26b of the fraction loop are also switched in synchronism. This results in, for example, supplying a different fractionated component from a different flow path 27 from those in the state of Fig. 2, to the trap column 30a and trapping and concentrating the fractionated component therein.

On the other hand, the organic solvent 38a and water 38b being the mobile phases for two-dimensional analysis flow through the flow path L46, switching valve 28a, and flow path L32 to the trap column 30b, to elute a component having been trapped in the trap column 30b, and guides this component through the switching valve 28b and flow path L50 to the two-dimensional analysis column 32. Then the two-dimensional analysis is carried out in the two-dimensional analysis column 32. Then such switching between the states of the switching valve 28a and switching valve 28b is repeated to perform the trapping and concentration of each fractionated component in the fraction loop 24 by one trap column and the two-dimensional analysis in the two-dimensional analysis column of another component trapped in the other trap column, in parallel.

In the present embodiment, as described above, there are two systems of trap columns arranged in parallel and the path switching mechanism is arranged to alternately implement switching between the first state in which one trap column is connected to the fraction loop 24 and in which the other trap column is connected to the two-dimensional analysis column 32, and the second state in which the other trap column is connected to the fraction loop 24 and in which one trap column is connected to the two-dimensional analysis column 32, whereby the apparatus is able to perform the trapping and concentration of the component in the trap column and the analysis in the two-dimensional analysis column 32 of the component trapped in the trap column, in parallel. This significantly increases the analysis efficiency, e.g., reduces the time necessary for the analysis.

### (Embodiment 2)

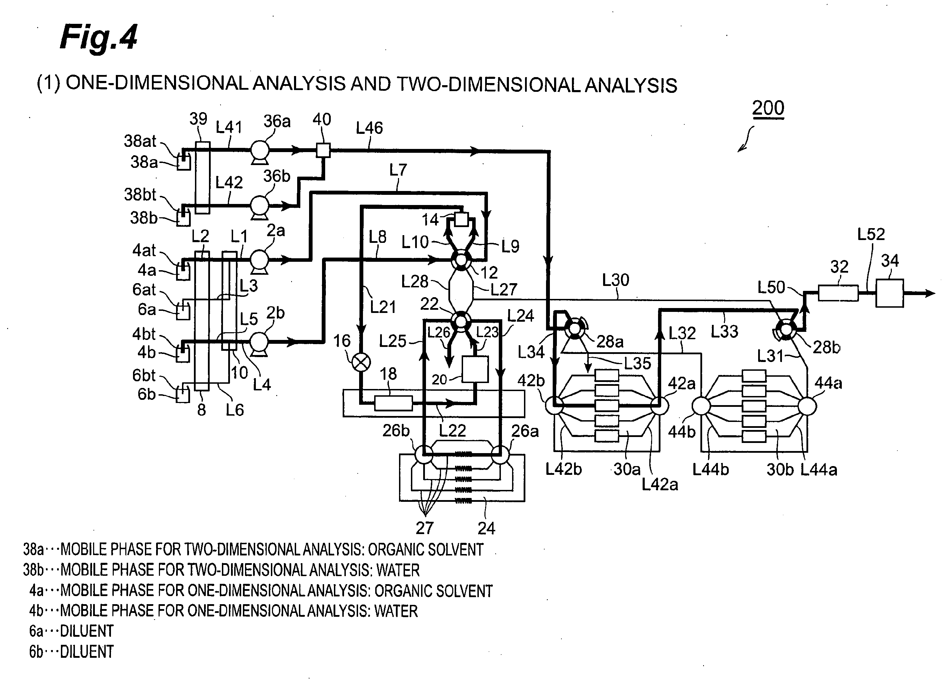

Fig. 4 shows a liquid chromatography apparatus 200 according to the second embodiment.

The second embodiment is different from the embodiment of Fig. 1 in that a plurality of trap columns 30a and a plurality of trap columns 30b are arranged in parallel and one of them is selected by distribution valves 42a, 42b or by distribution valves 44a, 44b.

In other words, the distribution valve 42b is connected to the flow path L34, one ends of the respective trap columns 30a are connected to respective flow paths L42b distributed from the distribution valve 42b, the other ends of the respective trap columns 30a are connected through respective flow paths L42a to the distribution valve 42a, and this distribution valve 42a is connected to the flow path L33.

Furthermore, the distribution valve 44b is connected to the flow path L32, one ends of the respective trap columns 30b are connected to respective flow paths L44b distributed from the distribution valve 44b, the other ends of the trap columns 30b are connected through respective flow paths L44a to the distribution valve 44a, and this distribution valve 44a is connected to the flow path L31.

This embodiment is arranged to simultaneously perform the one-dimensional analysis operation and the operation of fractionation with the two-dimensional analysis and also simultaneously perform the concentration operation in the trap and the two-dimensional analysis.

### (One-dimensional Analysis and Two-dimensional Analysis)

Fig. 4 shows the operation of simultaneously carrying out the one-dimensional analysis and the step of fractionation with the two-dimensional analysis. The one-dimensional analysis in the one-dimensional analysis column 18 and the operation of fractionation in the fraction loop 24 are carried out in the same manner as the operations described in Embodiment 1 with Fig. 1.

On the other hand, the organic solvent 38a and water 38b being the mobile phases for two-dimensional analysis are supplied in a degassed state through the online degasser 39 by the respective liquid feed pumps 36a and 36b, and are mixed in the mixer 40 to be fed to the switching valve 28a. The mixture of the mobile phases flows through the switching valve 28a to one of the trap columns 30a selected by the distribution valves 42a, 42b, to elute a sample component having been trapped in the trap column 30a and guide it through the switching valve 28b to the two-dimensional analysis column 32. The sample component guided to the analysis column 32 is further separated in the analysis column to be eluted and detected by the detector 34.

The switching valves 28a and 28b are switched (not shown), so as to perform the operation of eluting a sample component having been trapped in one of the trap columns 30b selected by the distribution valves 44a, 44b, and performing the two-dimensional analysis thereof in the analysis column 32.

### (Concentration and Two-dimensional Analysis)

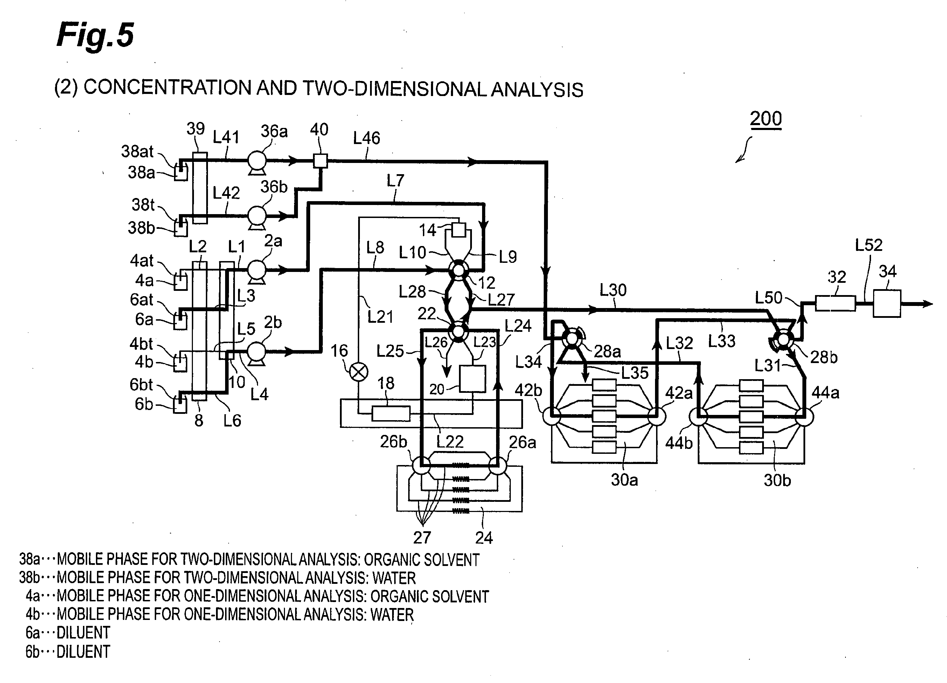

Fig. 5 shows the operation of carrying out the concentration in one of the trap columns 30b selected by the distribution valves 44a, 44b, and the operation of eluting a sample component having been trapped in one of the trap columns 30a selected by the distribution valves 42a, 42b and performing the two-dimensional analysis thereof in the analysis column 32. This operation is the same as the operation in Fig. 2. Subsequently, the switching valves 28a and 28b are switched (not shown), so as to perform the concentration in one of the trap columns 30a selected by the distribution valves 42a, 42b and the operation of eluting a sample component having been trapped in one of the trap columns 30b selected by the distribution valves 44a, 44b and performing the two-dimensional analysis thereof in the analysis column 32.

The present embodiment also provides the same operational effect as the first embodiment and, for example, by using a diluent containing no buffer such as a nonvolatile salt, as the diluent, it is feasible to suitably perform the desalting process. Furthermore, the present embodiment has the following advantage in addition thereto. Depending upon a kind of a component as an analysis target or the like, the component can remain in part in the trap column after the component is eluted from the trap column. In this case, it is assumed that cleaning of the trap columns 30a, 30b used is needed after the elution and before next concentration. However, since the present embodiment has the plurality of trap columns 30a, 30b, no cleaning time is necessary if the total number of trap columns 30a, 30b is greater than the number of components to be trapped; this reduces the analysis time. Even if the total number of trap columns 30a, 30b is smaller than the number of components to be trapped, the number of cleaning steps can be smaller than in the case of the first embodiment, and thus the analysis time can be reduced.

## Claims

1. A liquid chromatography apparatus comprising:
a one-dimensional analysis column for separating a sample into a plurality of components;
a preparative portion for fractionating the components separated by the one-dimensional analysis column, component by component, and for keeping the fractionated component;
a plurality of trap columns for trapping a component supplied from the preparative portion;
a two-dimensional analysis column for further separating a component trapped in the trap column, into a plurality of components; and
a path switching mechanism for implementing switching between:
a state in which the preparative portion is connected to a first trap column out of the plurality of trap columns and in which the two-dimensional analysis column is connected to a second trap column out of the plurality of trap columns, and
a state in which the preparative portion is connected to the second trap column out of the plurality of trap columns and in which the two-dimensional analysis column is connected to the first trap column out of the plurality of trap columns.

2. A liquid chromatography apparatus comprising:
a fractionation flow path for guiding a sample injected through a sample injection portion, to a one-dimensional analysis column by a mobile phase for one-dimensional analysis to effect separation thereof, and for fractionating a separated component with an eluent and keeping the component and eluent in a preparative portion;
a trap flow path for feeding the component and eluent kept in the preparative portion, to a trap column by a diluent, and for making the component trapped and concentrated in the trap column, wherein the trap column comprises a plurality of trap columns;
an analysis flow path for guiding the component trapped in the trap column, to a two-dimensional analysis column by a mobile phase for two-dimensional analysis, and for analyzing the component; and
a path switching mechanism for simultaneously performing a trapping-concentration operation in one trap column of the trap flow path, and a two-dimensional analysis of a component from another trap column.

3. The liquid chromatography apparatus according to Claim 1 or 2, wherein an inside diameter of the two-dimensional analysis column is 0.03-0.3 mm.
